# EUROPÄISCHE PATENTSCHRIFT

(11) **EP 4 029 364 B1**
(45) Veröffentlichungstag und Bekanntmachung des Hinweises auf die Patenterteilung: **29.07.2026**
(21) Anmeldenummer: 21202554.8
(22) Anmeldetag: 14.10.2021
(51) Int. Cl.: A01D 41/127, G01N 21/85, G06M 1/10, G01J 3/42, G01N 21/359

(54) **LANDWIRTSCHAFTLICHE ERNTEMASCHINE MIT MITTELN ZUR BESTIMMUNG DES TAUSENDKORNGEWICHTS**
AGRICULTURAL HARVESTER COMPRISING MEANS FOR DETERMINING THE THOUSAND GRAIN WEIGHT
SERARÉCOLTEUSE AGRICOLE COMPRENANT DES MOYENS DE DÉTERMINATION DU POIDS DE MILLE GRAINS

(30) Priorität: 18.01.2021 DE 102021100874
(43) Veröffentlichungstag der Anmeldung: 20.07.2022
(73) Patentinhaber: CLAAS Selbstfahrende Erntemaschinen GmbH, 33428 Harsewinkel (DE)
(72) Erfinder: Fischer, Frédéric, 59759 Arnsberg (DE); Witte, Johann, 58730 Fröndenberg (DE)
(74) Vertreter: CLAAS Gruppe

(56) Entgegenhaltungen:
- CN-A- 110 583 217
- DE-U1- 29 619 012
- US-A- 5 957 773
- US-B1- 6 559 655

## Beschreibung

Die Erfindung betrifft eine landwirtschaftliche Erntemaschine und ein Verfahren zur Bestimmung einer Tausendkornmasse einer Menge von Körnern in einer landwirtschaftlichen Erntemaschine.

Aus der DE29619012U1 ist ein Laborsystem zur Bestimmung einer Tausendkornmasse bekannt.

Aus der DE102016105488A1 ist ein Mähdrescher mit einem Zählsensor bekannt.

Aus der US 5 957 773 A ist ein Mähdrescher bekannt, der einerseits einen Massensensor zur Bestimmung der Masse eines Kornbehälters umfasst und andererseits einen Zählsensor aufweist, der die Ermittlung einer Anzahl von Körnern ermöglicht.

Aufgabe der Erfindung ist es die Tausendkornmasse auf einer Erntemaschine zu bestimmen.

Gelöst wird die Aufgabe durch eine landwirtschaftliche Erntemaschine gemäß Anspruch 1.

Aus der Masse der Körner und der Anzahl der Körner ist es möglich direkt auf der Erntemaschine die Tausendkornmasse der Körner zu bestimmen. Die Tausendkornmasse ist die Masse von eintausend Körnern. Die Tausendkornmasse entspricht damit der durchschnittlichen Kornmasse multipliziert mit einem Faktor von eintausend. Entsprechend kann die Tausendkornmasse aus jeder Anzahl von Körnern bestimmt werden, indem die Gesamtmasse der Körne durch die Anzahl der Körner geteilt wird und mit dem Faktor eintausend multipliziert wird. Es ist nicht notwendig die Masse von exakt eintausend Körnern zu bestimmen. Da die Tausendkornmasse äquivalent zur durchschnittlichen Kornmasse ist, kann auch diese verwendet werden.

In einer bevorzugten Ausgestaltung ist der Massensensor als optischer Inhaltstoffsensor ausgestaltet und dazu vorgesehen und eingerichtet ist eine optische Transmission der Körner zu messen. Die Bestimmung der Masse aus der optischen Transmission der Körner ermöglicht eine besonders schnelle und kontinuierliche Bestimmung der Masse.

In einer bevorzugten Ausgestaltung ist der Massensensor dazu vorgesehen und eingerichtet im nahinfrarot-Bereich, bevorzugt im Wellenlängenbereich zwischen 750nm und 2700nm, besonders bevorzugt zwischen 750nm und 1100nm, zu messen. Im Bereich zwischen 750nm und 2700nm lassen sich in der optischen Transmission spezifische Eigenschaften der Körner, insbesondere die Massen einer Vielzahl von Inhaltsstoffen, besonders gut bestimmen. Daher eignet sich dieser Wellenlängenbereich gut zur Massenbestimmung in der optischen Transmission. Der Bereich zwischen 750nm und 1100nm lässt sich mit günstigen Silizium-Detektoren ausmessen und bietet eine gute Bestimmung spezifischer Eigenschaften der Körner. Daher ist der Bereich zwischen 750nm und 1100nm wirtschaftlich besonders günstig.

In einer bevorzugten Ausgestaltung ist der Massensensor dazu vorgesehen und eingerichtet massenproportionale Absorptionsspektren zu messen und aus den Absorptionsspektren die Masse eines, mehrerer oder aller, der Inhaltsstoffe Wasser, Kohlenhydrate, Proteine und Fette der Körner zu bestimmen. Aus der Masse der Inhaltsstoffe lässt sich leicht auf die Masse der Körner schließen.

In einer bevorzugten Ausgestaltung ist der Massensensor dazu vorgesehen und eingerichtet aus den Massen der Inhaltsstoffe mittels eines Kalibrationsmodells die Masse der Körner zu bestimmen. Das Kalibrationsmodell gibt die Masse der nicht gemessenen Bestandteile der Körner im Verhältnis zu den gemessenen Bestandsteilen der Körner aus. Mittels des Kalibrationsmodells kann aus einer Messung eines oder mehrerer Inhaltsstoffe auf die Gesamtmasse der Körner geschlossen werden. Die nicht gemessenen Bestandteile können insbesondere Spurenelemente umfassen.

In einer bevorzugten Ausgestaltung umfasst der Massensensor ein Glasrohr, wobei das Glasrohr an einem Ende mit dem Zählsensor verbunden ist. Durch das Glasrohr können die Körner in der Transmission vermessen werden. Durch die direkte Verbindung mit dem Zählsensor werden dieselben Körner gezählt, die vom Massensensor vermessen werden.

In einer bevorzugten Ausgestaltung umfasst der Massensensor eine Wägezelle. Eine Wägezelle kann als Alternative zum optischen Sensor genutzt werden. Eine Wägezelle misst die Gewichtskraft, die auf die Körner im inneren der Wägezelle einwirkt.

In einer bevorzugten Ausgestaltung umfasst der Zählsensor eine Prallplatte. Mit einer Prallplatte können die Körner gezählt werden, die auf die Prallplatte fallen. Jedes Korn erzeugt beim Aufprall auf die Prallplatte Vibrationen. Diese Vibrationen können, bpsw. mit einem Klopfsensor, gemessen werden und aus den Vibrationen auf die Anzahl der Körner geschlossen werden.

In einer alternativen bevorzugten Ausgestaltung umfasst der Zählsensor eine Lichtschranke. Mit einer Lichtschranke kann ein Zählsensor in einer alternativen Weise ausgestaltet werden. Jedes Korn, das den Zählsensor passiert, unterbricht kurzzeitig die Lichtschranke und diese Unterbrechung wird vom Zählsensor erkannt und gezählt.

Weiterhin betrifft die Erfindung ein Verfahren zur Bestimmung einer Tausendkornmasse einer Menge von Körnern in einer landwirtschaftlichen Erntemaschine gemäß Anspruch 10. Diese Verfahren kann mit der offenbarten Erntemaschine ausgeführt werden.

Die Erfindung wird nachstehend anhand eines Ausführungsbeispiels näher erläutert. Die Figuren zeigen in
- Fig. 1:: eine landwirtschaftliche Erntemaschine,
- Fig. 2:: einen optischen Inhaltsstoffsensor als Massensensor und einen Zählsensor mit einer Prallplatte.

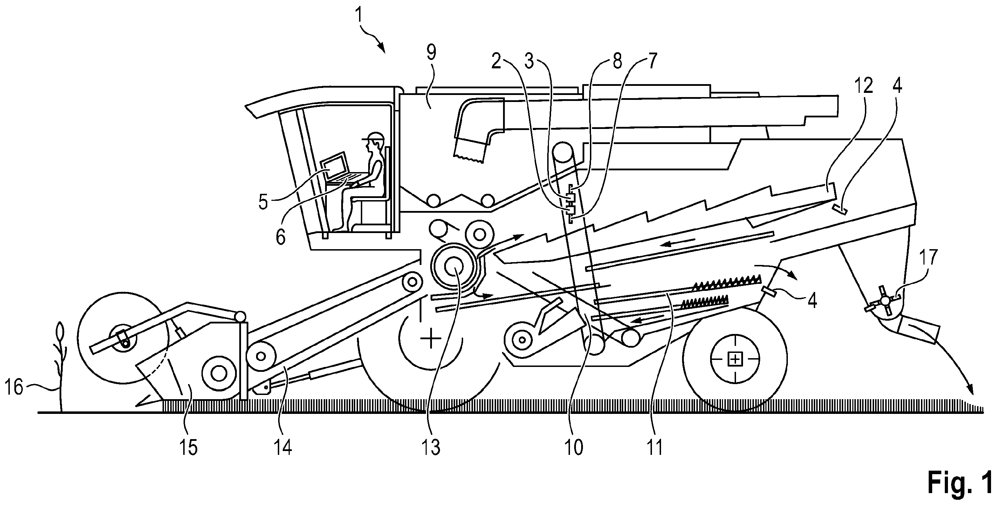

Figur 1 zeigt eine landwirtschaftliche Erntemaschine 1. In diesem Beispiel ist die Erntemaschine 1 ein Mähdrescher. Der Mähdrescher 1 nimmt Erntegut 16 mit einem Schneidwerk 15 auf. Mit einem Schrägförderer 14 wird das Erntegut 16 zum Dreschwerk 13 befördert. In Dreschwerk 13, Abscheidung 12 und Reinigung 11 werden die Körner vom restlichen Erntegut getrennt. Die Abscheidung 12 ist in diesem Beispiel als Hordenschüttler ausgeführt, andere Ausführungen bspw. als Rotorabscheidung sind möglich. Die Reinigung 11 besteht ist diesem Beispiel aus mehreren belüfteten Siebstufen. Die Körner werden von einem Elevator 10 in einen Auffangbehälter 9 transportiert. Die restlichen Teile des Ernteguts 16 verlassen den Mähdrescher 1 heckseitig. Dabei werden die von der Abscheidung 12 abgegebenen Teile des Ernteguts 16 durch einen Häcksler 17 geführt. Der restliche Teil des Ernteguts 16 wird dabei über Prallplatten 4 geführt. Im restliche Teil des Ernteguts 16 ggf. vorhandene Körner werden mit den Prallplatten 4 hinter der Abscheidung 12 und der Reinigung 11 gezählt.

Am Elevator 10 sind ein Massensensor 3 und ein Zählsensor 2 angebracht. Ein kleiner Teil der vom Elevator 10 beförderten Körner verlässt den Elevator 10 durch eine Austrittsöffnung und fällt durch ein Rohr 8 in den Massensensor 3. Der Massensensor 3 misst die Masse der Körner im Massensensor 3. Die Körner aus dem Massensensor 3 fallen danach in einen Zählsensor 2. Der Zählsensor 2 zählt die aus dem Massensensor 3 fallenden Körner. Die Körner fallen danach durch ein weiteres Rohr 7 und eine Eintrittsöffnung in den Elevator 10 zurück.

Die vom Massensensor 3 bestimmte Masse der Körner und dem Zählsensor 2 bestimmte Anzahl der Körner wird an eine Recheneinheit 6 übermittelt. In diesem Beispiel ist die Recheneinheit 6 in einer Fahrerkabine angeordnet. Die Recheneinheit 6 bestimmt aus der Masse der Körner und der Anzahl der Körner die Tausendkornmasse. Die Tausendkornmasse kann an den Fahrer ausgegeben werden, in diesem Beispiel mittels eines Bildschirms 5 in der Fahrerkabine, abgespeichert werden, an externe Stellen, bspw. ein Farm Management System, übermittelt werden und/oder zur Regelung von Arbeitsaggregate, bspw. dem Dreschwerk 13, der Abscheidung 12 und/oder der Reinigung 11, genutzt werden.

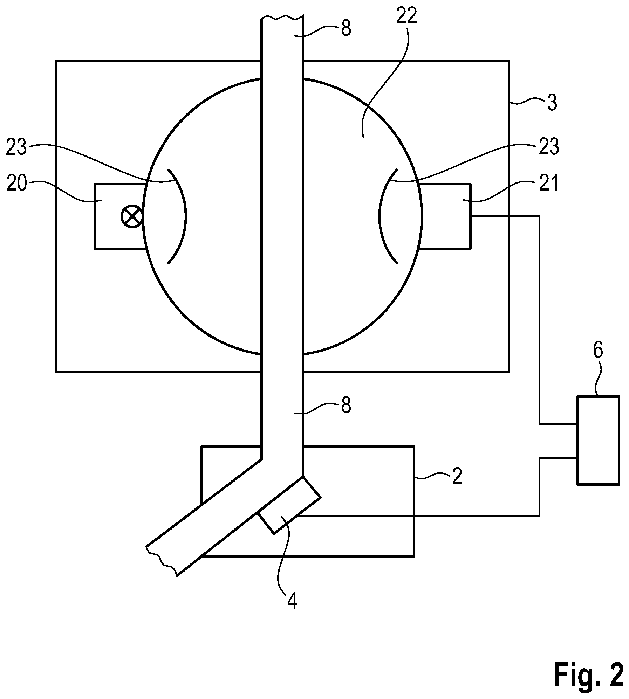

Figur 2 zeigt einen optischen Inhaltsstoffsensor als Massensensor 3 und einen Zählsensor 2 mit einer Prallplatte 4. Der Massensensor 3 umfasst eine Lichtquelle 20, einen Lichtsensor 21 und eine Hohlkammer 22. Die Lichtquelle 20 sendet Licht, insbesondere im nahinfraroten Bereich, aus. In diesem Beispiel ist die Lichtquelle 20 eine Glühwendel. Der Lichtsensor 21 ist insbesondere im Wellenlängenbereich 750nm bis 1100nm empfindlich. Die Hohlkammer 22 ist innen hoch reflektierend, insbesondere im Wellenlängenbereich 750nm bis 1100nm. ausgestaltet. In diesem Beispiel ist die Hohlkammer innen mit Polytetrafluorethylen beschichtet. Für homogene Reflektionen in der Hohlkammer 22 ist die Form einer Kugel vorteilhaft. Die Hohlkammer 22 entspricht damit einer Ulbricht-Kugel. Durch die Hohlkammer 22 führt ein Rohr 8. Das Rohr 8 ist zumindest innerhalb der Hohlkammer 22 insbesondere im Wellenlängenbereich 750nm bis 1100nm transparent. Weiterhin befinden sich innerhalb der Hohlkammer 22 optische Abdeckungen 23 vor der Lichtquelle 20 und dem Lichtsensor 21. Die Abdeckungen 23 vor der Lichtquelle 20 und/oder dem Lichtsensor 21 sind optional. Die Abdeckungen 23 verhindern, dass Licht direkt von der Lichtquelle 20 zum Lichtsensor 21 gelangt, dies verbessert das Messsignal des Lichtsensors 21. Vorzugsweise ist zumindest eine Abdeckung 23, besonders bevorzugt zwei Abdeckungen 23, vorhanden.

Die Körner fallen innerhalb des Rohres 8 durch den Hohlkammer 22. Die Körner absorbieren spezifische Wellenlängen des von der Lichtquelle 20 ausgesandten Lichtes. Das dadurch modulierte Licht wird vom Lichtsensor 21 gemessen. Das Messsignal des Lichtsensors 21 wird an eine Recheneinheit 6 weitergeleitet. Die Recheneinheit 6 bestimmt aus dem Messsignal des Lichtsensors 21 mittels eines Kalibrationsmodells die Masse der Körner innerhalb der Hohlkammer 22.

Die Körner fallen aus dem Massensensor 3 durch das Rohr 8 weiter in den Zählsensor 2. Der Zählsensor 2 umfasst eine Prallplatte 4. Jedes Korn, das auf die Prallplatte fällt, erzeugt eine Vibration der Prallplatte. Diese Vibrationen werden vom Zählsensor ausgewertet und der Zählwert an die Recheneinheit 6 weitergeleitet. Bei bekannter Fallgeschwindigkeit der Körner und der geometrischen Abmessungen der Sensoren 2, 3 und Rohre 8 kann der Zählwert des Zählsensors 2 einem Messsignal des Massesensors 3 zugeordnet werden. Die Recheneinheit 6 bestimmt aus der Masse der Körner und dem zugehörigen Zählwert die Tausendkornmasse der Körner.

### Bezugszeichenliste

- 1: Erntemaschine
- 2: Zählsensor
- 3: Massensensor
- 4: Prallplatte
- 5: Bildschirm
- 6: Recheneinheit
- 7: Rohr
- 8: Rohr
- 9: Auffangbehälter
- 10: Elevator
- 11: Reinigung
- 12: Abscheidung
- 13: Dreschwerk
- 14: Schrägförderer
- 15: Schneidwerk
- 16: Erntegut
- 17: Häcksler
- 20: Lichtquelle
- 21: Lichtsensor
- 22: Hohlkammer
- 23: Abdeckung

## Patentansprüche

1. Landwirtschaftliche Erntemaschine (1), nämlich ein Mähdrescher,
wobei die Erntemaschine (1) einen Zählsensor (2) umfasst,
wobei der Zählsensor (2) dazu vorgesehen und eingerichtet ist eine Anzahl von Körnern zu bestimmen,
wobei die Erntemaschine (1) einen Massensensor (3) umfasst,
wobei der Massensensor (3) dazu vorgesehen und eingerichtet ist eine Masse der Körner zu bestimmen,
wobei der Massensensor (3) und der Zählsensor (2) an einem Elevator (10) angebracht sind,
wobei die Erntemaschine (1) dazu vorgesehen und eingerichtet ist aus der Anzahl der Körner und der Masse der Körner die Tausendkornmasse der Körner zu bestimmen, in dem die vom Massensensor (3) bestimmte Masse der Körner und dem Zählsensor (2) bestimmte Anzahl der Körner an eine Recheneinheit (6) übermittelt wird und diese Recheneinheit (6) aus der Masse der Körner und der Anzahl der Körner die Tausendkornmasse bestimmt,
wobei die Tausendkornmasse ausgegeben, abgespeichert, an externe Stellen übermittelt und/oder zur Regelung von Arbeitsaggregaten genutzt wird.

2. Landwirtschaftliche Erntemaschine (1) nach Anspruch 1,
**dadurch gekennzeichnet, dass** der Massensensor (3) als optischer Inhaltstoffsensor ausgestaltet ist und dazu vorgesehen und eingerichtet ist eine optische Transmission der Körner zu messen.

3. Landwirtschaftliche Erntemaschine (1) nach Anspruch 2,
**dadurch gekennzeichnet, dass** der Massensensor (3) dazu vorgesehen und eingerichtet ist im nahinfrarot-Bereich, bevorzugt im Wellenlängenbereich zwischen 750nm und 2700nm, besonders bevorzugt zwischen 750nm und 1100nm, zu messen.

4. Landwirtschaftliche Erntemaschine (1) nach einem der Ansprüche 2 oder 3,
**dadurch gekennzeichnet, dass** der Massensensor (3) dazu vorgesehen und eingerichtet ist massenproportionale Absorptionsspektren zu messen und aus den Absorptionsspektren die Masse eines, mehrerer oder aller, der Inhaltsstoffe Wasser, Kohlenhydrate, Proteine und Fette der Körner zu bestimmen.

5. Landwirtschaftliche Erntemaschine (1)nach Anspruch 4,
**dadurch gekennzeichnet, dass** die Erntemaschine (1) dazu vorgesehen und eingerichtet ist aus den Massen der Inhaltsstoffe mittels eines Kalibrationsmodells die Masse der Körner zu bestimmen.

6. Landwirtschaftliche Erntemaschine (1) nach einem der Ansprüche 2 bis 5,
**dadurch gekennzeichnet, dass** der Massensensor (3) ein Glasrohr (8) umfasst, wobei das Glasrohr (8) an einem Ende mit dem Zählsensor (2) verbunden ist.

7. Landwirtschaftliche Erntemaschine (1) nach Anspruch 1,
**dadurch gekennzeichnet, dass** der Massensensor (3) eine Wägezelle umfasst.

8. Landwirtschaftliche Erntemaschine (1) nach einem der vorhergehenden Ansprüche,
**dadurch gekennzeichnet, dass** der Zählsensor (2) eine Prallplatte (4) umfasst.

9. Landwirtschaftliche Erntemaschine (1) nach einem der Ansprüche 1 bis 7,
**dadurch gekennzeichnet, dass** der Zählsensor (2) eine Lichtschranke umfasst.

10. Verfahren zur Bestimmung einer Tausendkornmasse einer Menge von Körnern in einer landwirtschaftlichen Erntemaschine (1), nämlich ein Mähdrescher, wobei ein Zählsensor (2) der landwirtschaftlichen Erntemaschine (1) eine Anzahl der Körner bestimmt,
wobei ein Massensensor (3) der landwirtschaftlichen Erntemaschine (1) eine Masse der Körner bestimmt, wobei der Massensensor (3) und der Zählsensor (2) an einem Elevator (10) angebracht sind,
wobei aus der Anzahl der Körner und der Masse der Körner die Tausendkornmasse der Körner bestimmt wird, in dem die vom Massensensor (3) bestimmte Masse der Körner und dem Zählsensor (2) bestimmte Anzahl der Körner an eine Recheneinheit (6) übermittelt wird und diese Recheneinheit (6) aus der Masse der Körner und der Anzahl der Körner die Tausendkornmasse bestimmt,
wobei die Tausendkornmasse ausgegeben, abgespeichert, an externe Stellen übermittelt und/oder zur Regelung von Arbeitsaggregaten genutzt wird.

11. Verfahren nach Anspruch 10,
**dadurch gekennzeichnet, dass** der Massensensor (3) als optischer Inhaltstoffsensor ausgestaltet ist und die Körner in optischer Transmission misst.

12. Verfahren nach einem der Ansprüche 10 oder 11,
**dadurch gekennzeichnet dass** der Massensensor (3) im nahinfrarot-Bereich, bevorzugt im Wellenlängenbereich zwischen 750nm und 2700nm, besonders bevorzugt zwischen 750nm und 1100nm, misst.

13. Verfahren nach einem der Ansprüche 10 bis 12,
**dadurch gekennzeichnet, dass** der Massensensor (3) massenproportionale Absorptionsspektren misst und aus den Absorptionsspektren die Masse eines, mehrerer oder aller, der Inhaltsstoffe Wasser, Kohlenhydrate, Proteine und Fette der Körner bestimmt werden.

14. Verfahren nach Anspruch 13,
**dadurch gekennzeichnet, dass** aus den Massen der Inhaltsstoffe mittels eines Kalibrationsmodells die Masse der Körner bestimmt wird.

15. Verfahren nach Anspruch 10,
**dadurch gekennzeichnet, dass** der Massensensor als Wägezelle ausgestaltet ist und das Gewicht der Körner misst.

## Claims

1. Agricultural harvesting machine (1), namely a combine harvester,
wherein the harvesting machine (1) comprises a counting sensor (2),
wherein the counting sensor (2) is provided and set up to determine a number of grains,
wherein the harvesting machine (1) comprises a mass sensor (3),
wherein the mass sensor (3) is provided and set up to determine a mass of the grains,
wherein the mass sensor (3) and the counting sensor (2) are mounted on an elevator (10),
wherein the harvesting machine (1) is provided and set up to determine the thousand-grain mass of the grains from the number of grains and the mass of the grains by virtue of the mass of the grains determined by the mass sensor (3) and the number of grains determined by the counting sensor (2) being transmitted to a computing unit (6) and this computing unit (6) determining the thousand-grain mass from the mass of the grains and the number of grains,
wherein the thousand-grain mass is output, stored, transmitted to external locations and/or used to control working units.

2. Agricultural harvesting machine (1) according to Claim 1,
**characterized in that** the mass sensor (3) is designed as an optical ingredient sensor and is provided and set up to measure an optical transmission of the grains.

3. Agricultural harvesting machine (1) according to Claim 2,
**characterized in that** the mass sensor (3) is provided and set up to carry out measurements in the near-infrared range, preferably in the wavelength range between 750 nm and 2700 nm, particularly preferably between 750 nm and 1100 nm.

4. Agricultural harvesting machine (1) according to either of Claims 2 and 3,
**characterized in that** the mass sensor (3) is provided and set up to measure mass-proportional absorption spectra and to use the absorption spectra to determine the mass of one, a plurality or all of the following ingredients: water, carbohydrates, proteins and fats of the grains.

5. Agricultural harvesting machine (1) according to Claim 4,
**characterized in that** the harvesting machine (1) is provided and set up to determine the mass of the grains from the masses of the ingredients by means of a calibration model.

6. Agricultural harvesting machine (1) according to one of Claims 2 to 5,
**characterized in that** the mass sensor (3) comprises a glass tube (8), wherein the glass tube (8) is connected at one end to the counting sensor (2).

7. Agricultural harvesting machine (1) according to Claim 1,
**characterized in that** the mass sensor (3) comprises a load cell.

8. Agricultural harvesting machine (1) according to one of the preceding claims,
**characterized in that** the counting sensor (2) comprises a baffle plate (4).

9. Agricultural harvesting machine (1) according to one of Claims 1 to 7,
**characterized in that** the counting sensor (2) comprises a light barrier.

10. Method for determining a thousand-grain mass of a quantity of grains in an agricultural harvesting machine (1), namely a combine harvester,
wherein a counting sensor (2) of the agricultural harvesting machine (1) determines a number of grains,
wherein a mass sensor (3) of the agricultural harvesting machine (1) determines a mass of the grains,
wherein the mass sensor (3) and the counting sensor (2) are mounted on an elevator (10),
wherein the thousand-grain mass of the grains is determined from the number of grains and the mass of the grains by virtue of the mass of the grains determined by the mass sensor (3) and the number of grains determined by the counting sensor (2) being transmitted to a computing unit (6) and this computing unit (6) determining the thousand-grain mass from the mass of the grains and the number of grains,
wherein the thousand-grain mass is output, stored, transmitted to external locations and/or used to control working units.

11. Method according to Claim 10,
**characterized in that** the mass sensor (3) is designed as an optical ingredient sensor and measures the grains in optical transmission.

12. Method according to either of Claims 10 and 11, **characterized in that** the mass sensor (3) carries out measurements in the near-infrared range, preferably in the wavelength range between 750 nm and 2700 nm, particularly preferably between 750 nm and 1100 nm.

13. Method according to one of Claims 10 to 12,
**characterized in that** the mass sensor (3) measures mass-proportional absorption spectra and the absorption spectra are used to determine the mass of one, a plurality or all of the following ingredients: water, carbohydrates, proteins and fats of the grains.

14. Method according to Claim 13,
**characterized in that** the mass of the grains is determined from the masses of the ingredients by means of a calibration model.

15. Method according to Claim 10,
**characterized in that** the mass sensor is designed as a load cell and measures the weight of the grains.

## Revendications

1. Machine de récolte agricole (1), à savoir moissonneuse-batteuse,
la machine de récolte (1) comprenant un capteur de comptage (2),
le capteur de comptage (2) étant prévu et conçu pour déterminer un nombre de grains,
la machine de récolte (1) comprenant un capteur de masse (3),
le capteur de masse (3) étant prévu et conçu pour déterminer une masse des grains,
le capteur de masse (3) et le capteur de comptage (2) étant fixés à un élévateur (10),
la machine de récolte (1) étant prévue et conçue pour déterminer la masse de mille grains des grains à partir du nombre de grains et de la masse des grains, en faisant en sorte que la masse des grains déterminée par le capteur de masse (3) et le nombre de grains déterminé par le capteur de comptage (2) soient transmis à une unité de calcul (6) et que ladite unité de calcul (6) détermine la masse de mille grains à partir de la masse des grains et du nombre de grains,
la masse de mille grains étant délivrée, stockée, transmise à des emplacements externes et/ou utilisée pour commander des unités de travail.

2. Machine de récolte agricole (1) selon la revendication 1,
**caractérisée en ce que** le capteur de masse (3) est configuré sous la forme d'un capteur optique de constituants et est prévu et conçu pour mesurer une transmission optique des grains.

3. Machine de récolte agricole (1) selon la revendication 2,
**caractérisée en ce que** le capteur de masse (3) est prévu et conçu pour effectuer la mesure dans le domaine du proche infrarouge, de préférence dans le domaine de longueurs d'onde compris entre 750 nm et 2700 nm, de manière particulièrement préférée entre 750 nm et 1100 nm.

4. Machine de récolte agricole (1) selon l'une des revendications 2 ou 3,
**caractérisée en ce que** le capteur de masse (3) est prévu et conçu pour mesurer des spectres d'absorption proportionnels à la masse et pour déterminer à partir des spectres d'absorption la masse d'un, d'une pluralité ou de la totalité des constituants eau, glucides, protéines et graisses des grains.

5. Machine de récolte agricole (1) selon la revendication 4,
**caractérisée en ce que** la machine de récolte (1) est prévue et conçue pour déterminer la masse des grains au moyen d'un modèle d'étalonnage à partir des masses des constituants.

6. Machine de récolte agricole (1) selon l'une des revendications 2 à 5,
**caractérisée en ce que** le capteur de masse (3) comprend un tube de verre (8), le tube de verre (8) étant relié par une extrémité au capteur de comptage (2).

7. Machine de récolte agricole (1) selon la revendication 1,
**caractérisée en ce que** le capteur de masse (3) comprend une cellule de pesée.

8. Machine de récolte agricole (1) selon l'une des revendications précédentes,
**caractérisée en ce que** le capteur de comptage (2) comprend une chicane (4).

9. Machine de récolte agricole (1) selon l'une des revendications 1 à 7,
**caractérisée en ce que** le capteur de comptage (2) comprend une barrière photoélectrique.

10. Procédé pour déterminer une masse de mille grains d'une quantité de grains dans une machine de récolte agricole (1), à savoir une moissonneuse-batteuse,
un capteur de comptage (2) de la machine de récolte agricole (1) déterminant un nombre de grains,
un capteur de masse (3) de la machine de récolte agricole (1) déterminant une masse des grains,
le capteur de masse (3) et le capteur de comptage (2) étant fixés à un élévateur (10),
la masse de mille grains des grains étant déterminée à partir du nombre de grains et de la masse des grains, en faisant en sorte que la masse des grains déterminée par le capteur de masse (3) et le nombre de grains déterminé par le capteur de comptage (2) soient transmis à une unité de calcul (6) et que ladite unité de calcul (6) détermine la masse de mille grains à partir de la masse des grains et du nombre de grains,
la masse de mille grains étant délivrée, stockée, transmise à des emplacements externes et/ou utilisée pour commander des unités de travail.

11. Procédé selon la revendication 10,
**caractérisé en ce que** le capteur de masse (3) est configuré sous la forme d'un capteur optique de constituants et mesure les grains en transmission optique.

12. Procédé selon l'une des revendications 10 et 11,
**caractérisé en ce que** le capteur de masse (3) effectue la mesure dans le domaine du proche infrarouge, de préférence dans le domaine de longueurs d'onde compris entre 750 nm et 2700 nm, de manière particulièrement préférée entre 750 nm et 1100 nm.

13. Procédé selon l'une des revendications 10 à 12,
**caractérisé en ce que** le capteur de masse (3) mesure des spectres d'absorption proportionnels à la masse et **en ce que** la masse d'un, d'une pluralité ou de la totalité des constituants eau, glucides, protéines et graisses des grains est déterminée à partir des spectres d'absorption.

14. Procédé selon la revendication 13,
**caractérisé en ce que** la masse des grains est déterminée au moyen d'un modèle d'étalonnage à partir des masses des constituants.

15. Procédé selon la revendication 10,
**caractérisé en ce que** le capteur de masse est configuré sous la forme d'une cellule de pesée et mesure le poids des grains.
